# EUROPEAN PATENT SPECIFICATION

(11) **EP 0 633 152 B1**
(45) Date of publication and mention of the grant of the patent: **09.09.1998**
(21) Application number: 94304971.8
(22) Date of filing: 06.07.1994
(51) Int. Cl.: B60C 1/00, C08L 21/00

(54) **Rubber composition for inner liners of tyres**
Kautschukmischung für Innenschichten von Reifen
Composition de caoutchouc pour revêtements internes de pneumatiques

(30) Priority: 08.07.1993 JP 169131/93
(43) Date of publication of application: 11.01.1995
(73) Proprietor: SUMITOMO RUBBER INDUSTRIES LIMITED, Kobe-shi, Hyogo-ken (JP)
(72) Inventor: Fukumoto, Takahiro, Kobe-shi, Hyogo-ken (JP); Nakada, Yoko, Kawabe-gun, Hyogo-ken (JP); Muraoka, Kiyoshige, Kobe-shi, Hyogo-ken (JP); Asano, Kazuo, Kobe-shi, Hyogo-ken (JP); Komatsuki, Masato, Takasago-shi, Hyogo-ken (JP)
(74) Representative: Stewart, Charles Geoffrey

(56) References cited:
- DE-A- 1 923 749
- US-A- 2 949 952
- US-A- 4 226 953
- US-A- 4 928 741

## Description

The present invention relates to a rubber composition suitable for inner liners of pneumatic tyres, and more particularly to the provision of inner liners having an improved impermeability to gases and suitable for use in tyres which are required to have a high retainability of tyre inner pressure, such as radial tyres for passenger cars, bias tyres for passenger cars, tyres for motorcycles, tyres for auto trucks and tyres for buses.

From the viewpoints of energy saving and resource saving, use of materials of low hysteresis loss and efforts for lightening have been made in automobile tyres in order to achieve low fuel consumption. Further, it is expected that in future it will become more important to develop tyres which contribute to low fuel consumption, with the popularisation of electric vehicles.

With respect to the weight reduction of tyres, it is proposed or practised (1) to decrease the depth of the grooves in the tread and the width of the tread together with improvement of the abrasion resistance of the tread rubber, (2) to substitute fibres materials such as Kevlar (aramid fibre) for steel materials, (3) to decrease the gauge or thickness of sidewall with improvement in the cut resistance, or (4) to decrease the gauge of the inner liner together with improvement to its inner pressure retainability. However, a still further improvement is desired with respect to the inner pressure retainability of the inner liner, since it has been recently studied to raise the inner pressure of tyres in order to achieve a low rolling resistance of tyres.

The inner liner is applied inside a tyre carcass which is generally reinforced by a textile or steel wire web. It is important that the inner liner has a good inner pressure retainability in order to minimise air migration from the inflation chamber into the carcass structure of the tyre. The parameters which control the inner pressure retainability of the inner liner are its air permeability and its gauge. Generally the inner liner is made from a butyl-type rubber such as butyl rubber or a halogenated butyl rubber, since butyl-type rubber has a good air impermeabillity. However, a further improvement in the air impermeability of the inner liner based on butyl-type rubber is required in order to achieve weight reduction of tyres by decreasing its gauge or in order to meet the demand of raising the inner pressure of tyres. An inner liner based on butyl-type rubber also has the disadvantage that it is poor in covulcanisability with other diene rubbers, thus it is poor in adhesion to a tyre carcass.

Accordingly, it is an object of the present invention to provide a rubber composition for inner liners which has a high air impermeability.

A further object of the present invention is to provide a rubber composition which provides inner liners capable of achieving weight reduction of tyres or capable of meeting the demand of further increase in inner pressure of tyres.

These and other objects of the present invention will become apparent from the description hereinafter.

According to one aspect of the present invention, there is provided a tyre inner liner made from a rubber composition comprising a rubber and 5 to 60 parts by weight of an acrylonitrile thermoplastic resin per 100 parts by weight of said rubber, said acrylonitrile thermoplastic resin is at least one member selected from the group consisting of a graft copolymer of acrylonitrile-butadiene rubber, acrylonitrile and at least one acrylic monomer selected from the group consisting of acrylic acid, methacrylic acid and their alkyl esters, an acrylonitrile-styrene copolymer and an acrylonitrile-butadiene-styrene resin.

Since the rubber composition of the present invention has an excellent air impermeability, it is possible to lighten tyres by decreasing the thickness of the inner liner and still maintain good inner pressure retainability of the inner liner. Also, it is possible to produce an inner liner which enables raising of the inner pressure of tyres in order to reduce the rolling resistance of tyres. Thus, further energy saving can be achieved.

Examples of the rubber used in the present invention are, for instance, natural rubber, a synthetic diene rubber, e.g. styrene-butadiene copolymer rubber, polybutadiene or polyisoprene, and a butyl-type rubber, e.g. butyl rubber or a halobutyl rubber such as chlorobutyl rubber or bromobutyl rubber. These rubbers may be used alone or in a mixture thereof.

Examples of the acrylonitrile thermoplastic resin incorporated into the rubber component are, for instance, a graft copolymer wherein acrylonitrile and an acrylic monomer are graft-polymerised onto an acrylonitrile-butadiene rubber; an acrylonitrile-styrene copolymer; and an acrylonitrile-butadiene-styrene resin (ABS resin).

The graft copolymers of acrylonitrile-butadiene rubber, acrylonitrile and an acrylic monomer are preferred. The acrylic monomer used in the preparation of the graft copolymers includes, for instance, those shown by the formula: CH₂=CRCOOR¹ wherein R is a hydrogen atom or a methyl group, and R¹ is a hydrogen atom or an alkyl group, especially an alkyl group having 1 to 4 carbon atoms, e.g. acrylic acid, methacrylic acid and an alkyl acrylate or methacrylate having a C₁ to C₄ alkyl group such as methyl, ethyl, n-propyl, isopropyl, n-butyl, isobutyl or t-butyl group. The acrylonitrile content of the acrylonitrile-butadiene rubber in the graft copolymers is usually from 20 to 50% by weight. It is preferable that the proportion of the graft component is from 75 to 90% by weight based on the acrylonitrile-butadiene rubber. The content of acrylonitrile in the graft component is usually from more than 2% by weight to less than 95% by weight. Methyl acrylate is preferable as the acrylic monomer.

The acrylonitrile thermoplastic resin is used in an amount of 5 to 60 parts by weight, more preferably 20 to 40 parts by weight, per 100 parts by weight of the rubber component. If the amount is less than 5 parts by weight, the effect of improving the air impermeability is not obtained. If the thermoplastic resin is used in an amount over 60 parts by weight, no large improvement in air impermeability according to the increase in the amount is obtained, and the mechanical strength is rather decreased.

An inner liner having an improved high air impermeability can be obtained by adding the acrylonitrile thermoplastic resin to butyl-type rubbers conventionally used in the inner liner. The rubber composition containing the acrylonitrile thermoplastic resin and a butyl-type rubber such as regular butyl rubber, a halobutyl rubber or a mixture thereof is very suitable for the production of inner liners. Diene rubbers such as natural rubber and styrene-butadiene rubber, especially natural rubber, are also applicable to inner liners of tyres. In that case, diene rubbers may be used alone or in combination with a butyl-type rubber. Thus, inner liners having an improved air impermeability can be prepared in a usual manner from a composition comprising a rubber component consisting of 0 to 100% by weight of a butyl-type rubber and 100 to 0% by weight of a diene rubber, preferably natural rubber, and 5 to 60 parts by weight of the acrylonitrile thermoplastic resin per 100 parts by weight of the rubber component.

The air impermeability of rubbers can be improved by the incorporation of the acrylonitrile thermoplastic resin. Accordingly, when natural rubber or a synthetic diene rubber is used as the rubber component, the rubber composition according to the present invention is also useful as a gas barrier layer which also serves to improve the adhesion between a conventional inner liner based on the butyl-type rubber and the tyre carcass. The pneumatic tyre thus has over its entire surface an inner liner consisting of an inner layer and a gas barrier layer disposed between said inner layer and the tyre carcass. Thus, the inner liner according to the present invention may be composed of two layers wherein one layer disposed radially inside of the carcass is prepared from a rubber composition comprising natural rubber or a synthetic diene rubber and the acrylonitrile thermoplastic resin, and the other layer is prepared from a rubber composition comprising the butyl-type rubber, as conventionally used for the preparation from a rubber composition comprising the butyl-type rubber, as conventionally used for the preparation of inner liners, to which the acrylonitrile thermoplastic resin may be added.

The rubber composition of the present invention may contain additives for rubbers usually employed in the production of tyres, for example, carbon black, antioxidant, softener, curing agent such as sulphur, curing accelerator, activator such as zinc oxide or stearic acid filler, and other known additives.

The rubber composition of the present invention is prepared by mixing the ingredients in the usual manner.

The rubber composition of the present invention is suitable for the production of inner liners of tyres such as radial and bias tyres for passenger cars, tyres for motorcycles, tyres for auto trucks and tyres for buses.

The present invention is more specifically described and explained by means of the following Examples and Comparative Examples in which all % and parts are by weight unless otherwise noted. It is to be understood that the present invention is not limited to the Examples.

### EXAMPLE 1

A rubber composition was prepared by mixing the ingredients shown in the following recipe in the usual manner.

| Ingredients | Amount (parts) |
|---|---|
| Natural rubber | 50 |
| Styrene-butadiene rubber*¹ | 50 |
| Carbon black*² | 40 |
| Stearic acid | 2 |
| Zinc oxide | 4 |
| Antioxidant*³ | 2 |
| Tackifier*⁴ | 4 |
| Acrylonitrile thermoplastic resin*⁵ | 10 |
| Sulphur | 1.2 |
| Curing accelerator*⁶ | 0.5 |

| | |
|---|---|
| (Notes) *1 Styrene-butadiene rubber (SBR1500 made by Sumitomo Chemical Company Limited) | |
| *2 N330 made by Showa Cabot Kabushiki Kaisha | |
| *3 Poly(2,2,4-trimethyl-1,2-dihydroquinone) | |
| *4 Tackifier commercially available under the trade mark NONFLEX RD made by Seiko Kagaku Kabushiki Kaisha | |
| *5 Graft copolymer of acrylonitrile-butadiene rubber, acrylonitrile and methyl acrylate (acrylonitrile content about 75%, butadiene content 13% and methyl acrylate content 12%) commercially available under the trade mark VALEX RESIN made by Mitsui Toatsu Chemicals Inc | |
| *6 N-tert-butyl-2-benzothiazylsulfenamide | |

The rubber composition was cured at 150°C for 30 minutes to give a sheet having a thickness of 0.2mm. The amounts of permeation of oxygen and nitrogen were measured according to ASTM D 814-56T using the obtained sheet having a diameter of 90mm, and the coefficients of oxygen permeability and nitrogen permeability (10⁻¹⁰ mℓ cm/cm² sec cmHg) were calculated. The tear strength (KN/m) of the sheet was measured according to JIS K 6301.

The results are shown in Table 1.

### EXAMPLE 2

The procedure of Example 1 was repeated except that the acrylonitrile thermoplastic resin was used in an amount of 20 parts.

The results are shown in Table 1.

### EXAMPLE 3

The procedure of Example 1 was repeated except that the acrylonitrile thermoplastic resin was used in an amount of 40 parts.

The results are shown in Table 1.

### COMPARATIVE EXAMPLE 1

The procedure of Example 1 was repeated except that the acrylonitrile thermoplastic resin was not used.

The results are shown in Table 1.

### COMPARATIVE EXAMPLE 2

The procedure of Example 1 was repeated except that the acrylonitrile thermoplastic resin was used in an amount of 3 parts.

The results are shown in Table 1.

### COMPARATIVE EXAMPLE 3

The procedure of Example 1 was repeated except that the acrylonitrile thermoplastic resin was used in an amount of 70 parts.

The results are shown in Table 1.

**TABLE 1**

| | Ex.1 | Ex.2 | Ex.3 | Com Ex.1 | Com Ex.2 | Com Ex.3 |
|---|---|---|---|---|---|---|
| Rubber component | | | | | | |
| Natural rubber | 50 | 50 | 50 | 50 | 50 | 50 |
| SBR | 50 | 50 | 50 | 50 | 50 | 50 |
| Acrylonitrile thermoplastic resin (phr) | 10 | 20 | 40 | - | 3 | 70 |

| Air impermeability (10⁻¹⁰mℓ cm/cm² sec cmHg | | | | | | |
|---|---|---|---|---|---|---|
| Oxygen permeability coefficient | 16.1 | 15.0 | 10.9 | 21.6 | 21.0 | 10.1 |
| Nitrogen permeability coefficient | 5.3 | 4.9 | 2.8 | 7.9 | 8.0 | 2.5 |
| Tear Strength (KN/m) | 43.2 | 41.9 | 44.4 | 48.0 | 49.4 | 26.3 |

It is seen from the results shown in Table 1 that when the amount of acrylonitrile thermoplastic resin is less then 5 parts, the air impermeability is not improved, and when the amount is more than about 60 parts, the degree of improvement in the air impermeability is not so large as the increase of the amount, and the mechanical strength is rather lowered.

### EXAMPLE 4

A rubber composition was prepared by mixing the ingredients shown in the following recipe in a usual manner.

| Ingredients | Amount (parts) |
|---|---|
| Bromobutyl rubber¹ | 100 |
| Carbon black*² | 50 |
| Paraffin oil*³ | 10 |
| Stearic acid | 1 |
| Zinc oxide | 5 |
| Acrylonitrile thermoplastic resin*⁴ | 10 |
| Sulphur | 0.5 |
| Curing accelerator*⁵ | 1.25 |

| | |
|---|---|
| (Notes) *1 Bromobutyl rubber 2255 made by Exxon Chemical Co | |
| *2 N330 made by Showa Cabot Kabushiki Kaisha | |
| *3 Paraffin oil commercially available under the tread mark DIANA PROCESS PS 32 made by Idemitsu Kosan Co Ltd | |
| *4 The same resin VALEX RESIN as used in Example | |
| *5 Benzothiazyldisulfide | |

The rubber composition was cured to give a sheet and the air impermeability thereof was measured in the same manner as in Example 1.

The results are shown in Table 2.

### EXAMPLE 5

The procedure of Example 4 was repeated except that the acrylonitrile thermoplastic resin was used in an amount of 40 parts.

The results are shown in Table 2.

### COMPARATIVE EXAMPLE 4

The procedure of Example 4 was repeated except that the acrylonitrile thermoplastic resin was not used.

The results are shown in Table 2.

**TABLE 2**

| | Ex.4 | Ex.5 | Com Ex.4 |
|---|---|---|---|
| Acrylonitrile thermoplastic resin (phr) | 10 | 40 | - |

| Air impermeability (10⁻¹⁰ mℓ cm/cm² sec cmHg | | | |
|---|---|---|---|
| Oxygen permeability coefficient | 0.87 | 0.58 | 2.21 |
| Nitrogen permeability coefficient | 0.24 | 0.15 | 0.32 |

It is seen from the results shown in Table 2 that the air permeability of a butyl-type rubber which is known to have a good air impermeability and is conventionally used in inner liners of tyres, is further improved by the incorporation of an acrylonitrile thermoplastic resin.

In addition to the ingredients used in the Examples, other ingredients can be used in the Examples as set forth in the specification to obtain substantially the same results.

## Claims

1. A tyre inner liner made from a rubber composition comprising a rubber and 5 to 60 parts by weight of an acrylonitrile thermoplastic resin per 100 parts by weight of said rubber, said acrylonitrile thermoplastic resin is at least one member selected from the group consisting of a graft copolymer of acrylonitrile-butadiene rubber, acrylonitrile and at least one acrylic monomer selected from the group consisting of acrylic acid, methacrylic acid and their alkyl esters, an acrylonitrile-styrene copolymer and an acrylonitrile-butadiene-styrene resin.

2. The inner liner of claim 2, characterised in that said rubber is at least one member selected from the group consisting of butyl rubber, chlorobutyl rubber and bromobutyl rubber.

3. The inner liner of claim 1 or 2, characterised in that said acrylonitrile thermoplastic resin is a graft copolymer of acrylonitrile-butadiene rubber having an acrylonitrile content of 20 to 50% by weight, acrylonitrile and an acrylic monomer of the formula: CH₂=CRCOOR¹ wherein R is hydrogen atom or methyl group, and R¹ is an alkyl group having 1 to 4 carbon atoms, the content of acrylonitrile in the graft component being from more than 2% by weight to less than 95% by weight.

4. The inner liner of claim 1 or 2, characterised in that said acrylonitrile thermoplastic resin is a graft copolymer of acrylonitrile-butadiene rubber, acrylonitrile and methyl acrylate.

5. A pneumatic tyre characterised by having over its entire inner surface an inner liner made from a rubber composition comprising a rubber and 5 to 60 parts by weight of an acrylonitrile thermoplastic resin per 100 parts by weight of said rubber, said rubber being at least one member selected from the group consisting of butyl rubber, chlorobutyl rubber and bromobutyl rubber, and said acrylonitrile thermoplastic resin being at least one member selected from the group consisting of a graft copolymer of acrylonitrile-butadiene rubber, acrylonitrile and at least one acrylic monomer selected from the group consisting of acrylic acid, methacrylic acid and their alkyl esters, an acrylonitrile-styrene copolymer and an acrylonitrile-butadiene-styrene resin.

6. The pneumatic tyre of claim 5, characterised in that said acrylonitrile thermoplastic resin is a graft copolymer of acrylonitrile-butadiene rubber, acrylonitrile and an acrylic monomer of the formula: CH₂=CRCOOR¹ wherein R is hydrogen atom or methyl group, and R¹ is an alkyl group having 1 to 4 carbon atoms.

7. A pneumatic tyre characterised by having over its entire inner surface an inner liner consisting of an inner layer and a gas barrier layer disposed between said inner layer and a tyre carcass, said inner layer being made from a rubber composition comprising at least one rubber selected from the group consisting of butyl rubber and a halogenated butyl rubber, and said gas barrier layer being made from a rubber composition comprising at least one diene rubber selected from the group consisting of natural rubber and a synthetic diene rubber, and 5 to 60 parts by weight of an acrylonitrile thermoplastic resin per 100 parts by weight of said diene rubber, wherein said acrylonitrile thermoplastic resin is at least one member selected from the group consisting of a graft copolymer of acrylonitrile-butadiene rubber, acrylonitrile and at least one acrylic monomer selected from the group consisting of acrylic acid, methacrylic acid and their alkyl esters, an acrylonitrile-styrene copolymer and an acrylonitrile-butadiene-styrene resin.

## Patentansprüche

1. Reifen-Innerliner, der aus einer Kautschukmischung hergestellt ist, die einen Kautschuk und 5 bis 60 Gewichtsteile eines thermoplastischen Acrylnitrilharzes je 100 Gewichtsteile des Kautschuks enthält, wobei das thermoplastische Acrylnitrilharz wenigstens ein Glied ist aus der Gruppe eines Pfropfcopolymers von Acrylnitril-Butadien-Kautschuk, Acrylnitril und wenigstens einem Acrylmonomeren aus der Gruppe Acrylsäure, Methacrylsäure und deren Alkylestern, eines Acrylnitril-Styrol-Copolymers und eines Acrylnitril-Butadien-Styrol-Harzes.

2. Innerliner nach Anspruch 2, dadurch gekennzeichnet, daß der Kautschuk wenigstens ein Glied aus der Gruppe Butylkautschuk, Chlorbutylkautschuk und Brombutylkautschuk ist.

3. Innerliner nach Anspruch 1 oder 2, dadurch gekennzeichnet, daß das thermoplastische Acrylnitrilharz ein Pfropfcopolymer von Acrylnitril-Butadien-Kautschuk mit einem Acrylnitrilgehalt von 20 bis 50 Gew.-%, Acrylnitril und einem Acrylmonomeren der Formel: CH₂=CRCOOR¹ ist, in der R ein Wasserstoffatom oder eine Methylgruppe ist und R¹ eine Alkylgruppe mit 1 bis 4 Kohlenstoffatomen bedeutet, wobei der Acrylnitrilgehalt in der Pfropfkomponente mehr als 2 Gew.-% bis weniger als 95 Gew.-% beträgt.

4. Innerliner nach Anspruch 1 oder 2, dadurch gekennzeichnet, daß das thermoplastische Acrylnitrilharz ein Pfropfcopolymer von Acrylnitril-Butadien-Kautschuk, Acrylnitril und Methylacrylat ist.

5. Luftreifen, dadurch gekennzeichnet, daß er über seiner gesamten inneren Oberfläche einen Innerliner aufweist, der aus einer Kautschukmischung hergestellt ist, die einen Kautschuk und 5 bis 60 Gewichtsteile eines thermoplastischen Acrylnitrilharzes je 100 Gewichtsteile des Kautschuks enthält, wobei der Kautschuk wenigstens ein Glied aus der Gruppe Butylkautschuk, Chlorbutylkautschuk und Brombutylkautschuk ist und das thermoplastische Acrylnitrilharz wenigstens ein Glied ist aus der Gruppe eines Pfropfcopolymers von Acrylnitril-Butadien-Kautschuk, Acrylnitril und wenigstens einem Acrylmonomeren aus der Gruppe Acrylsäure, Methacrylsäure und deren Alkylestern, eines Acrylnitril-Styrol-Copolymers und eines Acrylnitril-Butadien-Styrol-Harzes.

6. Luftreifen nach Anspruch 5, dadurch gekennzeichnet, daß das thermoplastische Acrylnitrilharz ein Pfropfcopolymer von Acrylnitril-Butadien-Kautschuk, Acrylnitril und einem Acrylmonomer der Formel: CH₂=CRCOOR¹ ist, in der R ein Wasserstoffatom oder eine Methylgruppe ist und R¹ eine Alkylgruppe mit 1 bis 4 Kohlenstoffatomen bedeutet.

7. Luftreifen, dadurch gekennzeichnet, daß er über seiner gesamten inneren Oberfläche einen Innerliner aufweist,der aus einer inneren Schicht und einer Gassperrschicht besteht, die zwischen der inneren Schicht und einer Reifenkarkasse angeordnet ist, wobei die innere Schicht aus einer Kautschukmischung hergestellt ist, die wenigstens einen Kautschuk aus der Gruppe Butylkautschuk und halogeniertem Butylkautschuk enthält, und wobei die Gassperrschicht aus einer Kautschukmischung hergestellt ist, die wenigstens einen Dienkautschuk aus der Gruppe Naturkautschuk und synthetischem Dienkautschuk und 5 bis 60 Gewichtsteile eines thermoplastischen Acrylnitrilharzes je 100 Gewichtsteile des Dienkautschuks enthält, wobei das thermoplastische Acrylnitrilharz wenigstens ein Glied ist aus der Gruppe eines Pfropfcopolymers von Acrylnitril-Butadien-Kautschuk, Acrylnitril und wenigstens einem Acrylmonomeren aus der Gruppe Acrylsäure, Methacrylsäure und deren Alkylestern, eines Acrylnitril-Styrol-Copolymers und eines Acrylnitril-Butadien-Styrol-Harzes.

## Revendications

1. Gomme interne de pneumatique formée d'une composition de caoutchouc qui contient un caoutchouc et 5 à 60 parties en poids d'une résine thermoplastique d'acrylonitrile pour 100 parties en poids du caoutchouc, la résine thermoplastique d'acrylonitrile est au moins une résine choisie dans le groupe constitué par un copolymère greffé de caoutchouc de butadiène-acrylonitrile, d'acrylonitrile et d'au moins un monomère acrylique choisi dans le groupe constitué par l'acide acrylique, l'acide méthacrylique et leurs esters alkyliques, un copolymère d'acrylonitrile-styrène et une résine d'acrylonitrile-butadiène-styrène.

2. Gomme interne selon la revendication 1, caractérisée en ce que le caoutchouc est au moins une substance choisie dans le groupe formé par le caoutchouc butyle, le caoutchouc de chlorobutyle et le caoutchouc de bromobutyle.

3. Gomme interne selon la revendication 1 ou 2, caractérisée en ce que la résine thermoplastique d'acrylonitrile est un copolymère greffé de caoutchouc d'acrylonitrile-butadiène ayant une teneur en acrylonitrile comprise entre 20 et 50 % en poids, d'acrylonitrile et d'un monomère acrylique de formule CH₂=CRCOOR¹, R étant un atome d'hydrogène ou un groupe méthyle, et R¹ est un groupe alkyle ayant 1 à 4 atomes de carbone, la teneur en acrylonitrile du copolymère greffé étant comprise entre plus de 2 % en poids et moins de 95 % en poids.

4. Gomme interne selon la revendication 1 ou 2, caractérisée en ce que la résine thermoplastique d'acrylonitrile est un copolymère greffé d'un caoutchouc d'acrylonitrile-butadiène, d'acrylonitrile et d'acrylate de méthyle.

5. Pneumatique caractérisé en ce qu'il possède, sur toute sa surface interne, une gomme interne formée d'une composition de caoutchouc qui contient un caoutchouc et 5 à 60 parties en poids d'une résine thermoplastique d'acrylonitrile pour 100 parties en poids du caoutchouc, le caoutchouc étant au moins un élément choisi parmi le groupe formé par le caoutchouc butyle, le caoutchouc de chlorobutyle et le caoutchouc de bromobutyle, et la résine thermoplastique d'acrylonitrile est au moins une résine choisie dans le groupe formé par un copolymère greffé de caoutchouc d'acrylonitrile-butadiène, d'acrylonitrile et d'au moins un monomère acrylique choisi dans le groupe constitué par l'acide acrylique, l'acide méthacrylique et leurs esters alkyliques, un copolymère d'acrylonitrile-styrène et une résine de copolymère d'acrylonitrile-butadiène-styrene.

6. Pneumatique selon la revendication 5, caractérisé en ce que la résine thermoplastique d'acrylonitrile est un copolymère greffé d'un caoutchouc d'acrylonitrile-butadiène, d'acrylonitrile ou d'un monomètre acrylique de formule CH₂=CRCOOR¹, R étant un atome d'hydrogène ou un groupe méthyle et R¹ étant un groupe alkyle ayant 1 à 4 atomes de carbone.

7. Pneumatique caractérisé en ce qu'il comporte, à toute sa surface interne, une gomme interne constituée d'une couche interne et d'une couche de barrage empêchant le passage de gaz placée entre la couche interne et la carcasse du pneumatique, la couche interne étant formée d'une composition de caoutchouc qui comprend au moins un caoutchouc choisi dans le groupe constitué par le caoutchouc butyle et un caoutchouc butyle halogéné, et la couche d'arrêt de gaz étant formée d'une composition de caoutchouc qui contient au moins un caoutchouc de diène choisi dans le groupe constitué par le caoutchouc naturel et un caoutchouc de diène de synthèse, et 5 à 60 parties en poids d'une résine thermoplastique d'acrylonitrile pour 100 parties en poids d'un caoutchouc de diène, dans lequel la résine thermoplastique d'acrylonitrile est au moins une substance choisie dans le groupe constitué par un copolymère greffé de caoutchouc d'acrylonitrile-butadiène, d'acrylonitrile et d'au moins un monomère acrylique choisi dans le groupe constitué par l'acide acrylique, l'acide méthacrylique et leurs esters alkyliques, un copolymère d'acrylonitrile-styrène et une résine d'acrylonitrile-butadiène.
